# EUROPÄISCHE PATENTANMELDUNG

(11) **EP 3 492 737 A1**
(43) Veröffentlichungstag der Anmeldung: **05.06.2019**
(21) Anmeldenummer: 18207546.5
(22) Anmeldetag: 21.11.2018
(51) Int. Cl.: F03D 80/00, F03D 80/50

(54) **WINDENERGIEANLAGE MIT EINEM SYSTEM ZUM VERTIKALEN TRANSPORT VON PERSONEN UND/ODER MATERIAL**

(30) Priorität: 30.11.2017 DE 102017011084
(71) Anmelder: Senvion GmbH, 22297 Hamburg (DE)
(72) Erfinder: DICKE, Daniel, 24783 Osterrönfeld (DE)
(74) Vertreter: Hahner, Ralph

(57) **Zusammenfassung**

Die Erfindung betrifft eine Windenergieanlage (2) mit einer Tragstruktur (4), einem Maschinenhaus (16) und einem System zum vertikalen Transport von Personen und/oder Material, wobei das System eine unmittelbar unterhalb des Maschinenhauses (16) angeordnete und an dem Maschinenhaus (16) befestigte Zugangsplattform (20) umfasst, dadurch gekennzeichnet, dass das System eine erste Anzahl X von vertikal entlang einer Außenwand (22) der Tragstruktur (4) verlaufenden Führungen (24) umfasst, wobei sich die Zugangsplattform (20) entlang eines Umfangs der Tragstruktur (4) auf einem Bruchteil des Gesamtumfangs erstreckt, wobei dieser Bruchteil größer ist als 1/X.

## Beschreibung

Die Erfindung betrifft eine Windenergieanlage mit einer Tragstruktur, einem Maschinenhaus und einem System zum vertikalen Transport von Personen und/oder Material, wobei das System eine unmittelbar unterhalb des Maschinenhauses angeordnete und an dem Maschinenhaus befestigte Zugangsplattform umfasst.

Für Windenergieanlagen ist als zweiter Evakuierungsweg aus dem in großer Höhe befindlichen Maschinenhaus vielfach automatisches Rettungsgerät vorgesehen. Mit diesem kann die Windenergieanlage mittels Abseilen verlassen werden. An Land ist es in der Regel unerheblich, wo die sich abseilende Person in Kontakt mit dem Boden kommt. Anders ist die Situation bei einer Offshore-Windenergieanlage. Ein Abseilen in das umgebende Wasser birgt grundsätzlich die Gefahr des Ertrinkens. Auch die Verwendung zusätzlicher persönlicher Schutzausrüstung vermeidet dieses Problem nicht vollständig und stellt außerdem für den Vorgang des Abseilens eine erhebliche Beeinträchtigung dar. Viele Offshore-Windenergieanlagen weisen am Turmfuß eine oberhalb des Meeresspielgels angeordnete Zugangsplattform auf. Über diese Zugangsplattform ist die Offshore-Windenergieanlage beispielsweise mittels eines Versorgungsschiffes zugänglich. Bereits bei geringen Windgeschwindigkeiten ist es jedoch nahezu unmöglich, diese Plattform beim Abseilen aus der Gondel zu treffen. Bei höheren Windgeschwindigkeiten ist dies praktisch aussichtlos.

Vergleichbare Probleme treten auch beim Materialtransport von einer solchen Zugangsplattform in die Gondel / in das Maschinenhaus auf. Selbiges gilt selbstverständlich auch beim Materialtransport beispielsweise mittels Seilen- oder Kettenzug aus dem Maschinenhaus auf die Zugangsplattform.

Aus der DE 102 22 472 A1 ist eine Vorrichtung bekannt, bei der eine Servicekabine entlang einer am Turm einer Windenergieanlage befestigten Schiene verfahren wird. Diese Einrichtung kann von Servicetechnikern aber auch zum Materialtransport genutzt werden. Zur Evakuierung von Personen aus dem Maschinenhaus einer Windenergieanlage ist aus der EP 1 624 186 A2 ein Rettungssystem bekannt, bei dem im unteren hinteren Bereich des Maschinenhauses eine Rettungskapsel integriert ist. Diese wird im Notfall über ein gebremst abgerolltes Halteseil in die Tiefe herabgelassen, so dass sich das Personal in Sicherheit bringen kann. Bei einem solchen System erfolgt die Rettung in das die Offshore-Windenergieanlage umgebende Wasser, mit den damit verbundenen Risiken und Problemen.

Es sind Systeme bekannt, bei denen für das Abseilen der Personen Führungsseile verwendet werden. Führungsseile stehen jedoch nur nach vorheriger aufwendiger Installation zur Verfügung, was im Notfall aufgrund der erforderlichen Zeit vielfach nicht möglich ist. Außerdem besteht die Gefahr, dass solche Führungsseile in Wechselwirkung mit den Rotorblättern treten oder aufgrund einer Azimutbewegung des Maschinenhauses zerrissen werden.

Aufgabe der vorliegenden Erfindung ist es, eine Windenergieanlage anzugeben, welche ein verbessertes System zum vertikalen Transport von Personen und/oder Material umfasst.

Die Aufgabe wird gelöst durch eine Windenergieanlage mit einer Tragstruktur, einem Maschinenhaus und einem System zum vertikalen Transport von Personen und/oder Material, wobei das System eine unmittelbar unterhalb des Maschinenhauses angeordnete und an dem Maschinenhaus befestigte Zugangsplattform umfasst, wobei die Windenergieanlage dadurch fortgebildet ist, dass das System eine erste Anzahl X von vertikal entlang einer Außenwand der Tragstruktur verlaufenden Führungen umfasst, wobei sich die Zugangsplattform entlang eines Umfangs der Tragstruktur auf einem Bruchteil des Gesamtumfangs erstreckt, wobei dieser Bruchteil größer ist als 1/X.

Die Zugangsplattform erstreckt sich in keinem Fall vollständig entlang des Umfangs der Tragstruktur. Sie erstreckt sich bevorzugt auf einem Bruchteil des Umfangs der geringfügig, beispielsweise 10% oder 20%, größer ist als der Bruchteil 1/X des Gesamtumfangs. Die Zugangsplattform ist insbesondere an einer einem Rotor der Windenergieanlage abgewandten Seite unterhalb des Maschinenhauses an diesem befestigt. Bei der Tragstruktur handelt es sich bevorzugt um einen Turm. Ferner ist insbesondere vorgesehen, dass die Tragstruktur ein zumindest näherungsweise im Querschnitt kreisrunder Turm ist.

Vorteilhaft ist stets zumindest eine der Führungen an der Außenwand der Tragstruktur unabhängig von der Azimutalposition des Maschinenhauses von der Zugangsplattform aus zugänglich. Wenn an der Tragstruktur beispielsweise drei Führungen, bei denen es sich beispielsweise um Schienen oder an der Außenseite des Turms lösbar befestigte Seile handelt, befestigt sind, so erstreckt sich die Zugangsplattform entlang einer Außenwand der Tragstruktur auf etwas mehr als einem Drittel des Gesamtumfangs. Es ist also sichergestellt, dass sich stets eine Führung im Bereich der Zugangsplattform befindet und unabhängig von der Azimutstellung des Maschinenhauses dieser Führung über die Zugangsplattform erreichbar ist. Unter Verwendung der permanent an der Außenwand der Tragstruktur vorhandenen Führungen ist es möglich, Personen oder auch Material vom Maschinenhaus auf eine am Turmfuß vorhandene untere Zugangsplattform, welche oberhalb des Meeresspiegels angeordnet ist, herabzulassen oder abzuseilen. Umgekehrt ist es ebenso möglich, unter Verwendung dieser Führungen Material von der unteren Zugangsplattform in das Maschinenhaus hinaufzuheben.

Insbesondere im Evakuierungsfall wird bei der Windenergieanlage gemäß Ausführungsformen der Erfindung wertvolle Zeit gewonnen. Da die Führungen permanent mit der Außenwand der Tragstruktur verbunden sind und nicht erst in einem zeitraubenden Prozess installiert werden müssen, können sich Personen im Notfall sofort in Sicherheit bringen. Die Führungen erlauben es auch bei widrigen Wetterbedingungen, beispielsweise bei großen Windstärken, Personen und Material sicher von dem Maschinenhaus auf die Zugangsplattform abzuseilen. Umgekehrt kann ebenfalls zuverlässig und sicher auch unter solchen Bedingungen Material von der Zugangsplattform in das Maschinenhaus transportiert werden.

Insbesondere sind die Führungen an der Außenwand der Tragstruktur so geführt, dass diese oder die Personen / das Material nicht mit weiteren an dieser Außenwand vorhandenen Vorrichtungen, wie beispielsweise Antennen oder Signalvorrichtungen (Warnlampen etc.), kollidieren.

Gemäß einer Ausführungsform ist vorgesehen, dass die Zugangsplattform einen aus hochklappbaren Bodenplattensegmenten zusammengesetzten Boden umfasst, wobei ein Bodenplattensegment in hochgeklappter Position eine Durchstiegsöffnung für zumindest eine Person freigibt.

Im Evakuierungsfall kann ein Bodenplattensegment der Zugangsplattform hochgeklappt werden, so dass eine Durchstiegsöffnung für zumindest eine Person vorhanden ist. Die übrigen Bodenplattensegmente bleiben in ihrer Ausgangsposition und dienen als Standort für die Person(en), welche im Begriff sind sich durch die Durchstiegsöffnung abzuseilen. Gleiches gilt für den Materialtransport. Hier kann das Material durch die Durchstiegsöffnung auf die Zugangsplattform heraufgeholt werden, die nicht hochgeklappten Bodenplattensegmente dienen beispielsweise der temporären Lagerung von Material. Es ist insbesondere vorgesehen, dass ein hochgeklapptes Bodenplattensegment, beispielsweise mit einem Riegel, in seinem hochgeklappten Zustand gesichert wird.

Gemäß einer weiteren Ausführungsform ist die Windenergieanlage dadurch fortgebildet, dass an der Außenwand der Tragstruktur zumindest eine Anzahl X von Anschlagpunkten zur Befestigung eines Personenrettungssystems vorhanden ist, wobei die Anschlagpunkte jeweils oberhalb einer Führung angeordnet sind, und wobei das Personenrettungssystem seilgebunden und zum Abseilen von einer oder mehreren Personen aus großer Höhe geeignet ist.

Die Anordnung der Anschlagpunkte oberhalb der Führungen sorgt dafür, dass bei Nutzung der an der Außenwand der Tragstruktur vorhandenen Führungen auf ein Seilsystem des Personenrettungssystems nur geringe Querkräfte wirken. Es ist insbesondere vorgesehen, dass mehrere Anschlagpunkte oberhalb der Führung vorgesehen sind, so dass sich mehrere Personen oder Teams gleichzeitig unter Nutzung der identischen Führung abseilen können. Dies ist problemlos möglich, da die Führung nur mit geringen oder Horizontalkräften beaufschlagt wird.

Im Boden des Maschinenhauses ist beispielsweise eine Luke vorhanden, durch die die Zugangsplattform vom Maschinenhaus aus erreichbar ist. Im Falle einer Evakuierung der Windenergieanlage, begeben sich die zu evakuierenden Personen auf die Zugangsplattform. Dort angekommen wird ein Personenrettungssystem an einem Anschlagpunkt an der Außenwand der Tragstruktur befestigt. Außerdem klinkt sich die zu evakuierende Person (oder die zu evakuierenden Personen) in das Personenrettungssystem, beispielsweise mit einem angelegten Geschirr, ein. Sind diese Vorbereitungen abgeschlossen, so kann ein geeignetes Bodenplattensegment, welches den Zugang zu den Führungen frei gibt, hochgeklappt und verriegelt werden. Im Anschluss seilen sich der oder die Mitarbeiter, geführt von den Führungen, in Richtung der unteren Zugangsplattform ab.

Gemäß einer weiteren Ausführungsform ist vorgesehen, dass zwischen einem der Tragstruktur zugewandten Innenrand des Bodens der Zugangsplattform und der Außenwand der Tragstruktur in einer horizontalen Richtung ein Spalt zum Durchführen zumindest eines Seils eines Personenrettungssystems vorhanden ist.

Vorteilhaft ist es bei einem solchen System möglich, eine sichere Evakuierung durchzuführen, selbst wenn das Maschinenhaus der Windenergieanlage eine Azimutfahrt durchführt. Das Rettungsgerät (insbesondere das Seil eines Personenrettungssystems) tritt nicht in Wechselwirkung mit der Zugangsplattform, so dass die Sicherheit der Personen stets gewährleistet ist.

Gemäß einer weiteren vorteilhaften Ausführungsform ist die Windenergieanlage dadurch fortgebildet, dass zumindest eine der Führungen eine formstabile Führungsschiene ist, die an der Außenwand der Tragstruktur befestigt und zur Führung eines Führungsschlittens eines Personenrettungssystems eingerichtet ist.

Die Ausführungen der Führungen als formstabile Führungsschiene erlaubt die Nutzung dieser Führungen im Fall der Evakuierung durch mehrere Teams oder Personen. Außerdem ist es mithilfe einer solchen Führungsschiene möglich, die Führungen auch für den Materialtransport einzusetzen.

Gemäß einer weiteren Ausführungsform ist vorgesehen, dass zumindest eine der Führungen ein Führungsseil ist, wobei das Führungsseil mit lösbaren Verbindungspunkten an der Außenwand der Tragstruktur befestigt ist und wobei die lösbaren Verbindungspunkte derart ausgestaltet sind, dass sie sich im Benutzungsfall, in dem sich eine oder mehrere Personen mit einem Personenrettungssystem entlang des Führungsseils abseilen, lösen und das Führungsseil von der Außenwand freigeben.

Wenn die Führung als Führungsseil ausgeführt wird, ist die Nutzung primär als zweiter Rettungsweg vorgesehen. Eine Nutzung der Führung für den Materialtransport ist sekundär. Das Führungsseil wird mit lösbaren Verbindungspunkten, beispielsweise mithilfe eines Klebers, Klebebandes oder einer Laminierung, an der Außenseite der Tragstruktur befestigt. Die Verbindungspunkte, beispielsweise die Klebung, sind derart ausgeführt, dass es nicht zu Wasseransammlungen zwischen der Außenwand der Tragstruktur und dem Führungsseil kommt, um einer Korrosion der Außenwand der Tragstruktur vorzubeugen. Die Verbindungspunkte sind so stabil ausgeführt, dass eine Relativbewegung zwischen Führungsseil und der Außenwand der Tragstruktur unterbunden wird. So wird vermieden, dass insbesondere bei großen Windstärken das Führungsseil gegen die Außenwand schlägt. Für den Fall der Benutzung ist die lösbare Verbindung ausreichend schwach ausgeführt, so dass beim Hinabgleiten an dem Führungsseil sich die Verbindungspunkte selbsttätig von der Außenwand der Tragstruktur lösen, der Klebstoff oder das Laminat beispielsweise abplatzt. Eine solche Ausführung der Führungen ist besonders kostengünstig und erlaubt außerdem die problemlose Nachrüstung bestehender Windenergieanlagen mit einem entsprechenden System.

Gemäß einer weiteren Ausführungsform ist vorgesehen, dass die Windenergieanlage eine Offshore-Windenergieanlage ist, welche am Turmfuß eine oberhalb des Meeresspiegels angeordnete untere Zugangsplattform umfasst, wobei die Führungen an dieser unteren Zugangsplattform enden.

Eine solche Zugangsplattform bildet einen ausreichend sicheren Zwischenort bei der Evakuierung der Windenergieanlage. Von dieser unteren Zugangsplattform können Personen oder Material beispielsweise über eine Leiter oder einen Kran ein Versorgungsschiff erreichen.

Gemäß einer weiteren Ausführungsform ist vorgesehen, dass bei einer Windenergieanlage, welche als Führung eine formstabile Führungsschiene aufweist, ein Führungsschlitten vorhanden ist, welcher einen Abstandhalter, beispielsweise eine Stange oder dergleichen, umfasst. Mithilfe eines solchen Abstandhalters können insbesondere Lasten in einem vorgesehenen Abstand von der Außenwand der Tragstruktur entlang der Führungsschiene bewegt werden.

Beim Heraufziehen von Lasten ist es erforderlich, dass sich ein Mitarbeiter vor dem Lastentransport auf die Zugangsplattform begibt und den Führungsschlitten einschließlich des Abstandhalters montiert. An einem freien Ende dieses Abstandhalters ist beispielsweise eine Öse vorhanden, durch die ein Seil geführt werden kann. Mithilfe des Abstandhalters, welcher schwenkbar an einem Führungsschlitten angelenkt sein kann, ist es auch möglich, nach Erreichen eines oberen Endes der Führungsschiene, die Last beispielsweise durch eine Luke in das Maschinenhaus der Windenergieanlage zu befördern.

Gemäß weiteren Aspekten dieser Ausführungsform weist die Zugangsplattform einen Schlitz auf, welcher sich in radialer Richtung (bezogen auf die Tragstruktur der Windenergieanlage) erstreckt. Dieser Schlitz ist in seinen Dimensionen (seiner Breite) an die Dimension des Abstandhalters (beispielsweise an die Breite der verwendeten Stange) angepasst. Der Schlitz durchsetzt die Zugangsplattform in Radialrichtung insbesondere vollständig, teilt diese also in zwei Teile oder Hälften.

Nach der Nutzung kann der Abstandhalter an einem geeigneten Ort im Maschinenhaus verstaut werden. Für die Nutzung dieses Systems ist es erforderlich, dass der Schlitz oder Spalt in der Zugangsplattform gegenüberliegend zu einer an der Außenwand der Tragstruktur vorhandenen Führungsschiene positioniert wird. Es ist also ggf. eine Ausrichtung (Azimutfahrt) des Maschinenhauses der Windenergieanlage erforderlich.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
Fig. 1 eine Windenergieanlage in einer schematisch vereinfachten Seitenansicht,
Fig. 2 eine schematisch vereinfachte Draufsicht auf die in Fig. 1 mit A-A bezeichnete Ebene.

In den Zeichnungen sind jeweils gleiche oder gleichartige Elemente und/oder Teile mit denselben Bezugsziffern versehen, so dass von einer erneuten Vorstellung jeweils abgesehen wird.

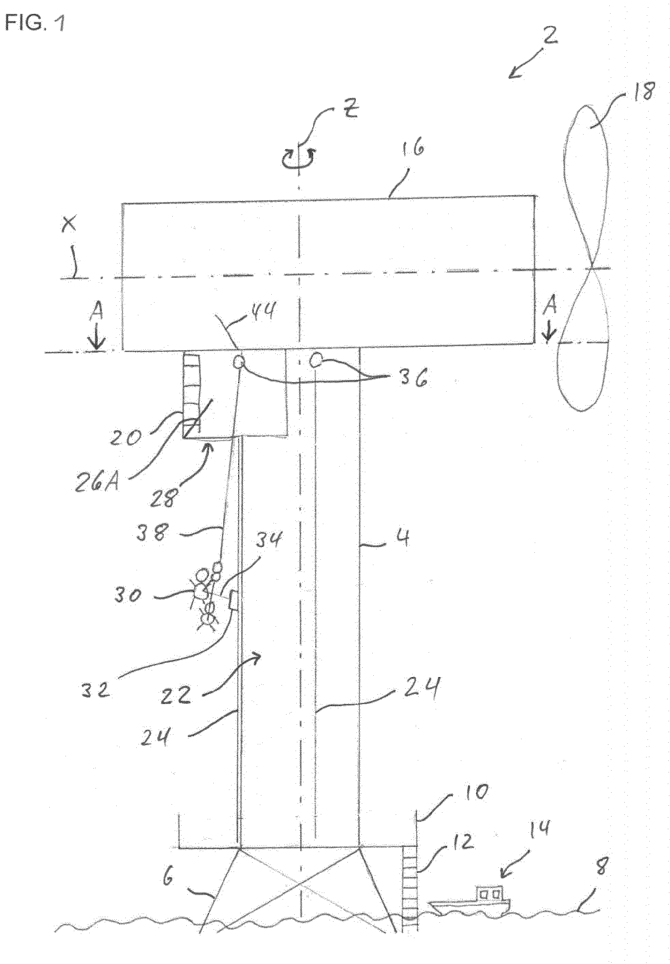

Fig. 1 zeigt eine Windenergieanlage 2 in einer schematisch vereinfachten Seitenansicht. Die Windenergieanlage 2 umfasst eine Tragstruktur 4, beispielhaft dargestellt ist ein Rohrturm. Die Tragstruktur 4 steht auf einem geeigneten Offshore-Fundament 6, welches in der See gegründet ist. Am Fuß der Tragstruktur 4, am Übergang zwischen dem Fundament 6 und dem als Tragstruktur 4 dienenden Rohrturm befindet sich eine untere Zugangsplattform 10. Die untere Zugangsplattform 10 ist oberhalb des Meeresspiegels 8 angeordnet und beispielhaft über eine Leiter 12 von einem Versorgungsschiff 14 aus zugänglich. Es ist ebenso vorgesehen, dass Personen oder Material mithilfe eines (nicht dargestellten) Krans von dem Versorgungsschiff 14 auf die untere Zugangsplattform 10 befördert werden.

Am oberen Ende der Tragstruktur 4 befindet sich ein Maschinenhaus 16. Das Maschinenhaus 16 einer Windenergieanlage 2 wird vielfach auch als Gondel bezeichnet. Das Maschinenhaus 16 ist um eine Azimutachse Z mithilfe eines zwischen dem Maschinenhaus 16 und der Tragstruktur 14 vorhandenen Azimutlagers und eines entsprechenden Azimutantriebs drehbar. An einer Vorderseite des Maschinenhauses 16 befindet sich ein schematisch dargestellter Rotor 18 der Windenergieanlage 2. Dieser ist um eine Rotationsachse X drehbar gelagert. Mit Hilfe der Rotorblätter des Rotors 18 wird dem Windfeld Energie entnommen und in Form eines Drehmoments auf einen Antriebsstrang der Windenergieanlage 2 übertragen.

Die Windenergieanlage 2 umfasst ein System zum vertikalen Transport von Personen und/oder Material. Dieses System umfasst eine unmittelbar unterhalb des Maschinenhauses 16 angeordnete und an dem Maschinenhaus 16 befestigte Zugangsplattform 20. Die Zugangsplattform 20 ist auf der dem Rotor 18 abgewandten Seite des Maschinenhauses 16 an dessen Unterseite angebracht. Das System umfasst ferner eine Anzahl X von vertikal entlang einer Außenwand 22 der Tragstruktur 4 verlaufenden Führungen 24. In Figur 1 sind aus Gründen der Übersichtlichkeit lediglich zwei Führung 24 dargestellt. Die Führungen 24 enden an der unteren Zugangsplattform 10, beispielsweise in einer Höhe von 1,60 m, bis 1,80 m.

Die Zugangsplattform 20 erstreckt sich entlang eines Umfangs der Tragstruktur 4 auf einem Bruchteil des Gesamtumfangs. Mit anderen Worten erstreckt sich die Zugangsplattform 20 in keinem Fall vollständig entlang des Umfangs der Tragstruktur 4. Der Bruchteil des Gesamtumfangs der Tragstruktur 4, entlang dessen sich die Zugangsplattform 20 erstreckt, ist größer als 1/X. Eine Zugangsplattform 20 erstreckt sich also entlang des Umfangs der Tragstruktur 4 auf etwas mehr als einem Drittel von deren Gesamtumfang, wenn sich an einer Außenwand 22 drei Führungen 24 befinden.

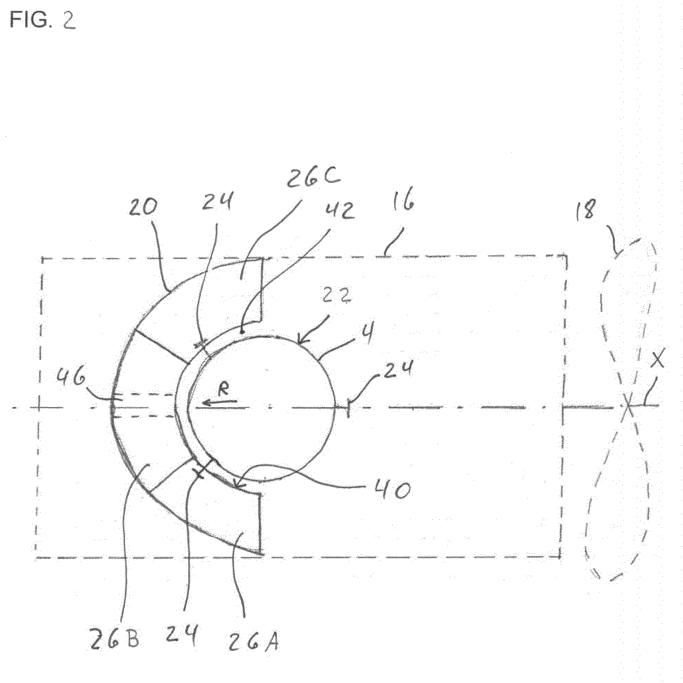

Fig. 2 zeigt eine schematisch vereinfachte Draufsicht auf die in Fig. 1 mit A-A bezeichnete Ebene. In gestrichelter Linie sind der Umriss des Maschinenhauses 16 und der Rotor 18 dargestellt. Die Zugangsplattform 20 umfasst einen Boden aus hochklappbaren Bodenplattensegmenten 26A - 26C. In der hochgeklappten Position geben sie eine Durchstiegsöffnung 28 für zumindest eine Person 30 frei.

In Fig. 1 ist schematisch und vereinfacht ein solches hochgeklapptes Bodenplattensegment 26A dargestellt. Durch die entstehende Durchstiegsöffnung 28 haben sich die schematisch und vereinfacht dargestellten Personen 30 aus der Zugangsplattform 20 in Richtung der unteren Zugangsplattform 10 abgeseilt. Das beispielhaft dargestellte Team nutzt ein Personenrettungssystem, beispielsweise ein automatisches Personenrettungssystem, und ferner eine Ausführungsform des Systems zum vertikalen Transport, welches einen Führungsschlitten 32 umfasst. Der Führungsschlitten 32 gleitet auf einer als formstabile Führungsschiene ausgeführten Führung 24 herab. Ferner verwenden die dargestellten Personen 30 ein System, bei dem an dem Führungsschlitten 32 ein Abstandhalter 34 montiert ist.

Die Windenergieanlage 2 umfasst an ihrer Außenwand 22 der Tragstruktur 4 eine Anzahl X von Anschlagpunkten 36 zur Befestigung eines Personenrettungssystems. Die Anschlagpunkte 36 sind jeweils oberhalb der Führungen 24 angeordnet. So ist es möglich, ein seilgebundenes Personenrettungssystem zum Abseilen von einer oder mehreren Personen 30 aus großer Höhe einzusetzen, wobei auf ein Seil 38 dieses System sowie auf die Führungsschlitten 32 nur geringe Querkräfte wirken.

Die Windenergieanlage 2 ist ferner bevorzugt so ausgestaltet, dass zwischen einem der Tragstruktur 4 zugewandten Innenrand 40 des aus den Bodensegmenten 26A - 26C zusammengesetzten Bodens der Zugangsplattform 20 und der Außenwand 22 der Tragstruktur 4 ein Spalt 42 vorhanden ist. Dieser Spalt 42 erstreckt sich in einer horizontalen Richtung, also in einer Richtung im Wesentlichen parallel zu der Rotationsachse X. Der Spalt 42 ist zum Durchführen des Seils 38 des Personenrettungssystems geeignet. So ist es möglich, Personen 30 sicher und zuverlässig aus der Zugangsplattform 20 zu evakuieren, auch wenn das Maschinenhaus 16 eine Azimutfahrt durchführt. Mit anderen Worten kann also auch bei einer Rotation des Maschinenhauses 16 um die Azimutachse Z das Seil 38 des Personenrettungssystems in dem Spalt 42 zuverlässig und sicher und ohne Gefahr von Beschädigungen geführt werden.

Bei der Führung 24 handelt es sich in dem dargestellten Ausführungsbeispiel um eine formstabile Führungsschiene, die an der Außenwand 22 der Tragstruktur 4 befestigt ist. Sie ist zur Führung des Führungsschlittens 32 des Personenrettungssystems eingerichtet. Unter Verwendung eines solchen Führungsschlittens 32 ist es auch möglich, das System zum Lastentransport zu benutzen. So können beispielsweise Lasten, die von einem Versorgungsschiff 14 auf die untere Zugangsplattform 10 transportiert wurden, mit dem System aufgenommen werden und mit diesem von der unteren Zugangsplattform 10 auf die Zugangsplattform 20 heraufgezogen werden. Bei einer solchen Ausführungsform kommt bevorzugt ein Führungsschlitten 32 zum Einsatz, der einen Abstandhalter 34, beispielsweise eine Stange, an deren freiem Ende eine Öse zum Durchführen des Seils 38 vorhanden ist, zum Einsatz. Es wird dann die Last von der unteren Zugangsplattform 10 hinauf auf die Zugangsplattform 20 gezogen. Hat der Führungsschlitten 32 das obere Ende der Führungen 24, also der formstabilen Führungsschiene, erreicht, so schwenkt der Abstandhalter 34 gegenüber dem Führungsschlitten 32 nach oben und die Last kann durch eine im Boden des Maschinenhauses 16 vorhandene Luke 44 in das Maschinenhaus 16 hinein verbracht werden. Um einen solchen Lastentransport zu ermöglichen, weist die Zugangsplattform 20, wie in Fig. 2 mit gestrichelter Linie angedeutet, einen Spalt oder Schlitz 46 auf, der die Zugangsplattform 20 in Radialrichtung R, genau genommen entlang der Achse X, in zwei Teile unterteilt. Durch diesen Spalt 46 kann der Abstandhalter 34 nach oben bewegt werden, so dass dieser an seinem Ende nach der Art eines Krans die Last in den Innenraum des Maschinenhauses 16 befördern kann. Bevor ein solcher Transport vorgenommen werden kann, ist es jedoch erforderlich, die Zugangsplattform 20 in Bezug auf die Führungen 24 auszurichten, so dass der Abstandhalter 34 problemlos durch den Spalt 46 hindurchgeführt werden kann. Die Ausrichtung der Zugangsplattform 20 erfolgt beispielsweise durch eine entsprechende Azimutfahrt des Maschinenhauses 16.

Gemäß einer weiteren Ausführungsform ist vorgesehen, dass zumindest eine der Führungen 24 ein Führungsseil ist. Ein solches Führungsseil ist mit lösbaren Verbindungspunkten an der Außenwand 22 der Tragstruktur 4 befestigt. Diese lösbaren Verbindungspunkte sind derart ausgestaltet, dass sie im Benutzungsfall, also beispielsweise bei der Evakuierung von Personen 30 aus dem Maschinenhaus 16, wobei sich diese Personen 30 entlang des Führungsseils abseilen, von selbst lösen. Das Führungsseil wird in diesem Fall von der Außenwand 22 der Tragstruktur 4 freigegeben. Die Ausführung der Führungen 24 in Form von Führungsseile ist kostengünstig und kann problemlos nachgerüstet werden. Die Verbindungspunkte sind beispielsweise Klebepunkte oder Laminierungen, die an der Außenseite/der Außenwand 22 der Tragstruktur 4 vorgesehen sind.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuaszeichenliste

- 2: Windenergieanlage
- 4: Tragstruktur
- 6: Fundament
- 8: Meeresspiegel
- 10: untere Zugangsplattform
- 12: Leiter
- 14: Versorgungsschiff
- 16: Maschinenhaus
- 18: Rotor
- 20: Zugangsplattform
- 22: Außenwand
- 24: Führungen
- 26A-26C: Bodenplattensegmente
- 28: Durchstiegsöffnung
- 30: Personen
- 32: Führungsschlitten
- 34: Abstandhalter
- 36: Anschlagpunkte
- 38: Seil
- 40: Innenrand
- 42: Spalt
- 44: Luke
- 46: Spalt

- Z: Azimutachse
- X: Rotationsachse

## Patentansprüche

1. Windenergieanlage (2) mit einer Tragstruktur (4), einem Maschinenhaus (16) und einem System zum vertikalen Transport von Personen und/oder Material, wobei das System eine, insbesondere unmittelbar, unterhalb des Maschinenhauses (16) angeordnete und an dem Maschinenhaus (16) befestigte Zugangsplattform (20) umfasst, **dadurch gekennzeichnet, dass** das System eine erste Anzahl X von wenigstens im Wesentlichen vertikal entlang einer Außenwand (22) der Tragstruktur (4) verlaufenden Führungen (24) umfasst, wobei sich die Zugangsplattform (20) entlang eines Umfangs der Tragstruktur (4) auf einem Bruchteil des Gesamtumfangs erstreckt, wobei dieser Bruchteil größer ist als 1/X.

2. Windenergieanlage (2) nach Anspruch 1, **dadurch gekennzeichnet, dass** die Zugangsplattform (20) einen aus hochklappbaren Bodenplattensegmenten (26A - 26C) zusammengesetzten Boden umfasst, wobei ein Bodenplattensegment (26A - 26C) in hochgeklappter Position eine Durchstiegsöffnung (28) für zumindest eine Person (30) freigibt.

3. Windenergieanlage (2) nach Anspruch 1 oder 2, **dadurch gekennzeichnet, dass** an der Außenwand (22) der Tragstruktur (4) zumindest eine Anzahl X von Anschlagpunkten (36) zur Befestigung eines Personenrettungssystems vorhanden ist, wobei die Anschlagpunkte (36) jeweils oberhalb einer Führung (24) angeordnet sind, und wobei das Personenrettungssystem seilgebunden und zum Abseilen von einer oder mehreren Personen (30) aus großer Höhe geeignet ist.

4. Windenergieanlage (2) nach einem der Ansprüche 1 bis 3, **dadurch gekennzeichnet, dass** zwischen einem der Tragstruktur (4) zugewandten Innenrand (40) des Bodens der Zugangsplattform (20) und der Außenwand (22) der Tragstruktur (4) in einer horizontalen Richtung ein Spalt (42) zum Durchführen zumindest eines Seils (38) eines Personenrettungssystems vorhanden ist.

5. Windenergieanlage (2) nach einem der Ansprüche 1 bis 4, **dadurch gekennzeichnet, dass** zumindest eine der Führungen (24) eine formstabile Führungsschiene ist, die an der Außenwand (22) der Tragstruktur (4) befestigt und zur Führung eines Führungsschlittens (32) eines Personenrettungssystems eingerichtet ist.

6. Windenergieanlage (2) nach einem der Ansprüche 1 bis 5, **dadurch gekennzeichnet, dass** zumindest eine der Führungen (24) ein Führungsseil ist, wobei das Führungsseil mit lösbaren Verbindungspunkten an der Außenwand (22) der Tragstruktur (4) befestigt ist und wobei die lösbaren Verbindungspunkte derart ausgestaltet sind, dass sie sich im Benutzungsfall, in dem sich eine oder mehrere Personen mit einem Personenrettungssystem entlang des Führungsseils abseilen, lösen und das Führungsseil von der Außenwand (22) freigeben.

7. Windenergieanlage (2) nach einem der Ansprüche 1 bis 6, **dadurch gekennzeichnet, dass** die Windenergieanlage (2) eine Offshore-Windenergieanlage ist, welche am Turmfuß eine oberhalb des Meeresspiegels angeordnete untere Zugangsplattform (10) umfasst, wobei die Führungen (24) an dieser unteren Zugangsplattform (10) enden.

8. Windenergieanlage (2) nach einem der Ansprüche 1 bis 7, **dadurch gekennzeichnet, dass** die Tragstruktur (4) ein zumindest näherungsweise im Querschnitt kreisrunder Turm ist.
